# FASCICULE DE BREVET EUROPEEN

(11) **EP 3 238 805 B1**
(45) Date de publication et mention de la délivrance du brevet: **21.03.2018**
(21) Numéro de dépôt: 17160339.2
(22) Date de dépôt: 10.03.2017
(51) Int. Cl.: B01D 46/00, B01D 46/10, B01D 46/44, B01D 46/42, G01N 21/00, F24F 11/00

(54) **SUPPORT POUR UNITÉ DE MESURE DU NIVEAU D'ENCRASSEMENT D'UN FILTRE**
HALTERUNG FÜR EINE EINHEIT ZUM MESSEN DES VERSCHMUTZUNGSNIVEAUS EINES FILTERS
SUPPORT FOR A FILTER CLOGGING MEASUREMENT LEVEL UNIT

(30) Priorité: 29.04.2016 FR 1653904
(43) Date de publication de la demande: 01.11.2017
(73) Titulaire: Schneider Electric Industries SAS, 92500 Rueil-Malmaison (FR)
(72) Inventeur: LINARES, Louis, 38050 GRENOBLE (FR); LOPEZ, Josep, 38050 GRENOBLE (FR)
(74) Mandataire: Tripodi, Paul

(56) Documents cités:
- EP-A1- 3 018 423
- EP-A1- 3 029 388
- US-A- 5 141 309

## Description

### Domaine technique de l'invention

La présente invention se rapporte à un support pour unité de mesure du niveau d'encrassement d'un filtre employé dans un système de filtration, notamment pour installation de chauffage, ventilation ou climatisation (HVAC). L'invention concerne également le dispositif de mesure complet qui intègre à la fois ledit support et l'unité de mesure du niveau d'encrassement.

### Etat de la technique

De manière connue, un système de filtration d'un fluide, employé notamment pour filtrer de l'air injecté dans un volume, tel que par exemple une armoire électrique, comporte :
- Une grille permettant une circulation de l'air,
- Une plaque support comprenant une face avant sur laquelle vient se fixer la grille,
- Un filtre se présentant en général sous la forme d'un matériau alvéolaire et venant se positionner derrière la grille, dans un logement prévu dans la plaque support,
- Un boîtier de ventilation destiné à venir se fixer sur la face arrière de la plaque support et comportant un ventilateur.

Le document WO2011/131424 décrit une architecture de ce type. Dans une telle architecture, l'encombrement étant limité en profondeur, il semble difficile de prévoir une solution de mesure du niveau d'encrassement du filtre.

Les brevets US7012685B1 et US8744780B2 décrivent tous deux des systèmes de filtrage pour installation de chauffage, ventilation ou climatisation (HVAC) incluant une solution de mesure du niveau d'encrassement du filtre. Ces solutions emploient un émetteur et un récepteur positionnés de part et d'autre du filtre, l'émetteur émettant un faisceau à travers le filtre à destination du récepteur. Le signal généré par le récepteur après réception du faisceau est ensuite traité par une unité de traitement en vue d'en déduire un niveau d'encrassement du filtre. Lorsque ce niveau d'encrassement dépasse un certain seuil, un signal d'alerte est par exemple envoyé. Ces solutions s'avèrent particulièrement encombrantes car elles exigent d'écarter suffisamment l'émetteur du récepteur de part et d'autre du filtre.

Le brevet US5141309A décrit une solution de détection d'encrassement de filtre.

Le but de l'invention est de proposer un support pour unité de mesure du niveau d'encrassement d'un filtre qui soit simple à fabriquer, à assembler, peu encombrant pour être employé dans différents systèmes de filtration sans modification et qui puisse être adapté sur des filtres de différentes tailles.

Le but de l'invention est également de proposer un dispositif de mesure du niveau d'encrassement d'un filtre qui inclut le support de l'invention et une unité de mesure du niveau d'encrassement.

### Exposé de l'invention

Ce but est atteint par un support pour unité de mesure du niveau d'encrassement d'un filtre, ledit filtre étant destiné à être employé dans un système de filtration d'un fluide et comportant au moins une première face et une deuxième face séparées entre elles par l'épaisseur du filtre et destinées à être traversées par un flux dudit fluide, ledit support comportant :
- Une première partie destinée à venir en vis-à-vis de la première face du filtre,
- Une deuxième partie destinée à venir en vis-à-vis de la deuxième face du filtre,
- Des moyens de liaison agencés pour relier la première partie à la deuxième partie en traversant le filtre sur son épaisseur et définissant un espace entre la première partie et la deuxième partie pour accueillir le filtre, et
- Des moyens de réception agencés pour recevoir ladite unité de mesure du niveau d'encrassement sur ladite première partie,
- Les moyens de réception comportant un logement de forme adaptée à celle de l'unité de mesure du niveau d'encrassement et des organes de fixation de ladite unité de mesure du niveau d'encrassement dans ledit logement,
- Le logement définissant une première branche et une deuxième branche destinées à supporter un émetteur de ladite unité de mesure du niveau d'encrassement et un récepteur de ladite unité de mesure du niveau d'encrassement,
- la première branche et la deuxième branche étant inclinées vers l'intérieur de l'espace formé entre la première partie et la deuxième partie, de manière à orienter la première branche et la deuxième branche de l'unité de mesure du niveau d'encrassement du filtre dans ledit espace destiné à être occupé par le filtre.

Selon une particularité, les moyens de liaison sont agencés pour adapter l'écartement entre la première partie et la deuxième partie en vue de l'adapter à l'épaisseur du filtre.

Selon une autre particularité, les moyens de liaison comportent au moins deux pointes et deux orifices de réception destinés chacun à coopérer avec une pointe distincte en vue d'assembler la première partie à la deuxième partie.

Selon une autre particularité, ladite armature de la première partie est en forme de U et présente une portion centrale et deux portions latérales prolongeant ladite partie centrale et se terminant chacune par une extrémité libre.

Selon une autre particularité, la deuxième partie comporte une deuxième armature en forme de U destinée à être positionnée en vis-à-vis de la première armature de la première partie et présentant une portion centrale et deux portions latérales prolongeant ladite partie centrale et se terminant chacune par une extrémité libre.

L'invention concerne également un dispositif de mesure du niveau d'encrassement d'un filtre, ledit filtre étant destiné à être employé dans un système de filtration d'un fluide et comportant au moins une première face et une deuxième face séparées entre elles par l'épaisseur du filtre et destinées à être traversées par un flux dudit fluide, ledit dispositif comportant une unité de mesure du niveau d'encrassement d'un filtre et un support tel que défini ci-dessus sur lequel est fixé ladite unité de mesure du niveau d'encrassement.

Selon une particularité du dispositif, ladite unité de mesure d'encrassement comporte un émetteur agencé pour émettre un faisceau et un récepteur agencé pour recevoir ledit faisceau.

Selon une autre particularité, ledit émetteur est agencé par rapport audit récepteur pour émettre un faisceau suivant une direction transversale à celle du flux dudit fluide.

Avantageusement, ledit émetteur est agencé par rapport audit récepteur pour émettre un faisceau suivant une direction parallèle à au moins une des faces dudit filtre.

Préférentiellement, l'unité de mesure du niveau d'encrassement est réalisée sous la forme d'au moins une carte électronique découpée de manière à former deux branches distinctes, une première branche portant ledit émetteur et une deuxième branche portant ledit récepteur.

Avantageusement, l'unité de mesure du niveau d'encrassement comporte une unité de signalisation du niveau d'encrassement du filtre. Cette unité de signalisation comporte par exemple plusieurs indicateurs lumineux soudés sur ladite carte électronique.

### Brève description des figures

D'autres caractéristiques et avantages vont apparaître dans la description détaillée qui suit faite en regard des dessins annexés dans lesquels :
- La figure 1 représente, vu en éclaté et en perspective, un système de filtration embarquant le dispositif de mesure de l'invention,
- Les figures 2A et 2B représentent, vu en éclaté, en perspective et selon deux angles de vision distincts, le dispositif de mesure de l'invention incluant le support de l'invention et l'unité de mesure du niveau d'encrassement,
- La figure 3 représente, vu en perspective, le dispositif de mesure de l'invention dans lequel le support de l'invention est vu en éclaté et l'unité de mesure du niveau d'encrassement est positionné sur ledit support,

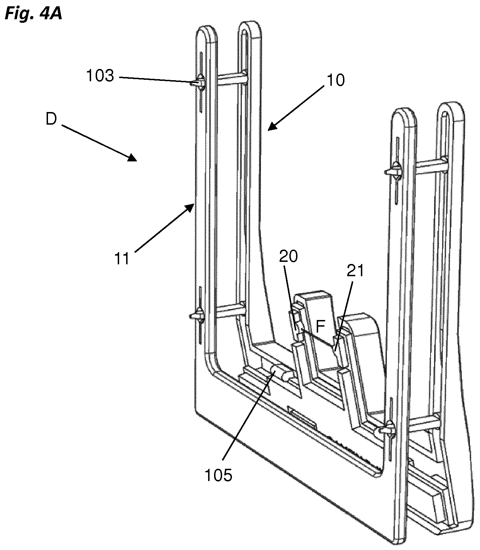

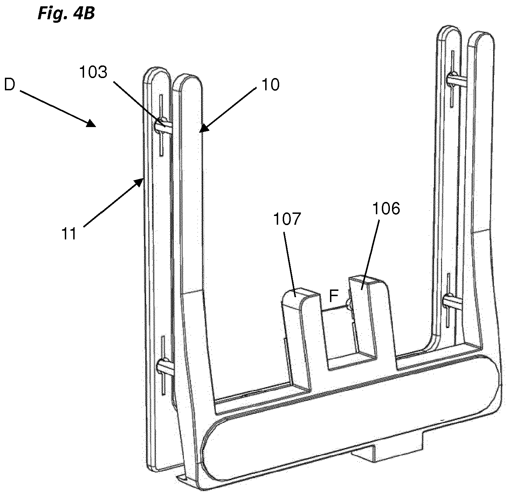

- Les figures 4A et 4B représentent, vu en perspective et selon deux angles de vision distincts, le dispositif de mesure de l'invention entièrement assemblé,
- La figure 5 illustre, vu en perspective, le principe d'assemblage du dispositif de mesure de l'invention sur un filtre,
- La figure 6 représente, vu en perspective, le dispositif de mesure de l'invention assemblé sur deux filtres de tailles différentes,
- Les figures 7A et 7B représentent, vu en perspective et selon deux coupes transversales distinctes, le dispositif de mesure de l'invention assemblé sur un filtre.

### Description détaillée d'au moins un mode de réalisation

Pour la description ci-dessous, on considérera les termes "externe" et "interne" en prenant comme référence le filtre. Un face interne sera ainsi orientée vers le filtre et une face externe sera orientée à l'opposé du filtre.

L'invention concerne tout d'abord un support pour accueillir une unité 2 de mesure du niveau d'encrassement d'un filtre 3, de manière à former un dispositif de mesure D global du niveau d'encrassement d'un filtre 3. De manière connue, un tel filtre 3 est destiné à être employé dans un système de filtration. Un système de filtration est destiné à la filtration d'un fluide, tel que par exemple un gaz comme l'air. Dans la suite de la description, de manière non limitative, nous ferons référence à la filtration de l'air. De manière non limitative, on considérera qu'un tel système de filtration est parfaitement adapté pour filtrer l'air injecté dans un volume, tel que par exemple une armoire électrique (non représentée). Bien entendu, il pourra être employé dans tous types d'application de filtration.

Dans la suite de la description, de manière non limitative, on considérera un filtre 3 qui présente deux faces 30, 31 parallèles séparées par l'épaisseur du filtre et destinées à être traversées par le flux d'air.

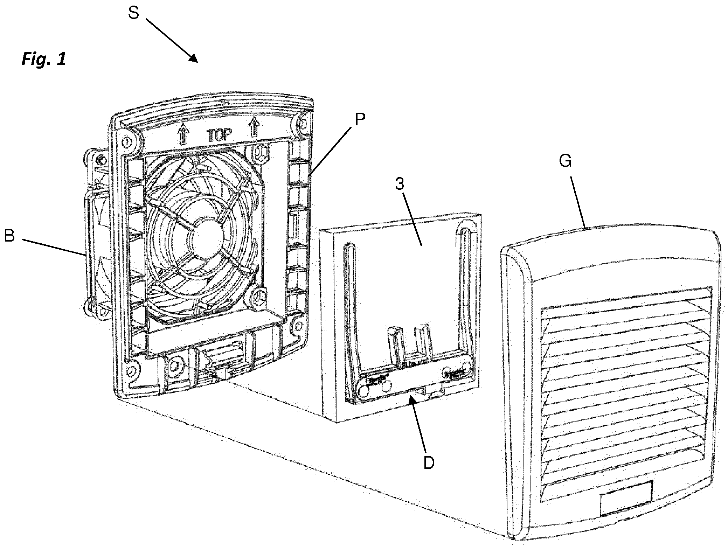

Comme représenté sur la figure 1, un système de filtration S comporte principalement une grille G située vers l'avant, une plaque support P, sur l'avant de laquelle vient se fixer la grille G, et un boîtier B de ventilation comportant un ventilateur venant se fixer sur l'arrière de la plaque support P.

De manière connue, le filtre 3, composé en règle générale d'un matériau alvéolaire, est destiné à être positionné dans un logement prévu dans la plaque support P entre le boîtier B de ventilation et la grille G pour filtrer le flux d'air généré par le ventilateur et qui traverse le système. Lorsque ce filtre 3 présente un niveau d'encrassement trop élevé, celui-ci doit être remplacé afin de maintenir une qualité de filtration optimale et ne pas perturber le passage du flux d'air.

Le support de l'invention est particulièrement adapté pour accueillir une unité 2 de mesure du niveau d'encrassement qui vient se noyer dans l'épaisseur du filtre 3, de manière à former un dispositif de mesure D complet tel que représenté sur les figures annexées.

De manière connue, une unité 2 de mesure d'encrassement comporte un émetteur 20 d'un faisceau pour la mesure d'encrassement et un récepteur 21 dudit faisceau. Le faisceau est de nature à permettre une analyse de spectre en fréquence pour détecter l'encrassement. L'émetteur 20 émet par exemple un faisceau de rayonnement électromagnétique, tel que par exemple un faisceau de lumière infrarouge ou proche de l'infrarouge, de lumière visible, ou de type ultrasonique. L'émetteur 20 sera par exemple une diode électroluminescente, un laser ou une autre source de rayonnement. Le récepteur 21 sera adapté pour capter le rayonnement émis par l'émetteur 20.

L'unité 2 de mesure du niveau d'encrassement pourra fonctionner sur le principe de la transmission ou de la réflexion. Dans le cas de la transmission, l'émetteur 20 et le récepteur 21 sont séparés l'un de l'autre de sorte que l'émetteur 20 émet un faisceau F1 à destination du récepteur 21. Dans le cas de la réflexion, l'émetteur 20 et le récepteur 21 sont adjacents et l'émetteur 20 émet un faisceau vers un réflecteur qui renvoie un faisceau réfléchi vers le récepteur 21. Sur les figures annexées, de manière non limitative, l'unité 2 de mesure utilise le principe de la transmission, l'émetteur et le récepteur sont donc éloignés l'un de l'autre et séparés par une partie de matériau alvéolaire constituant le filtre 3, à travers laquelle le faisceau F1 est émis par l'émetteur 20 à destination du récepteur 21. Bien entendu, un fonctionnement en mode réflexion ne changerait en rien le principe du support et du dispositif de mesure de l'invention.

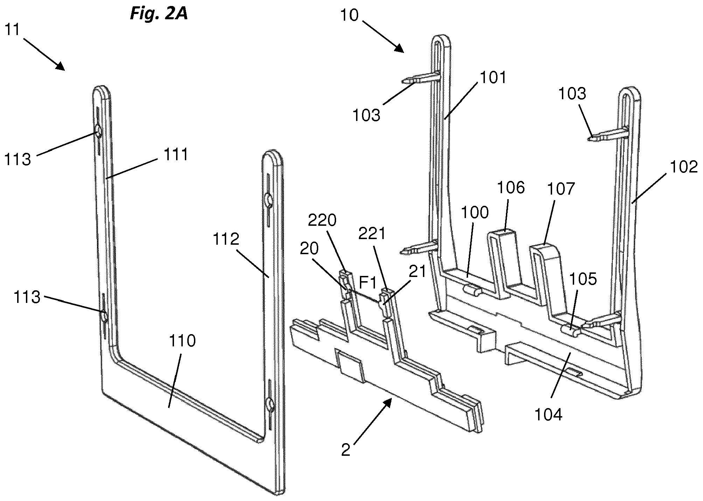

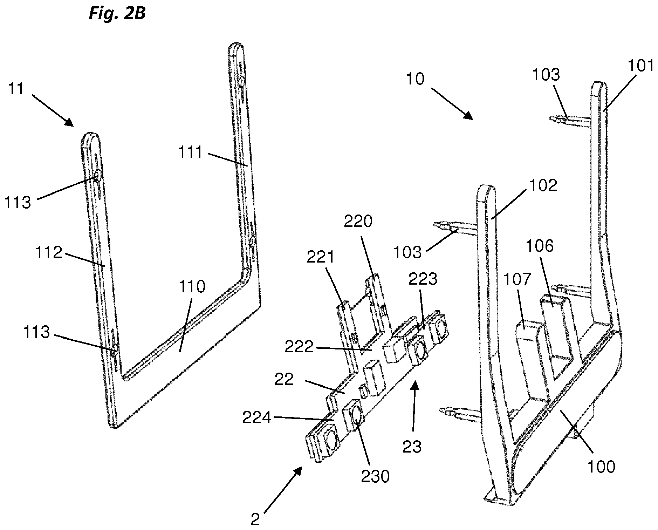

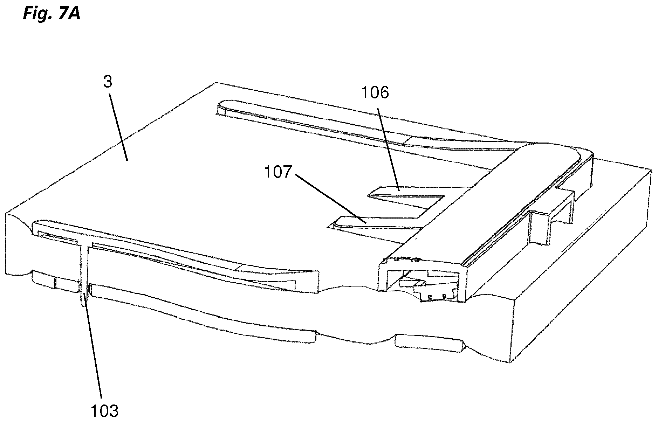

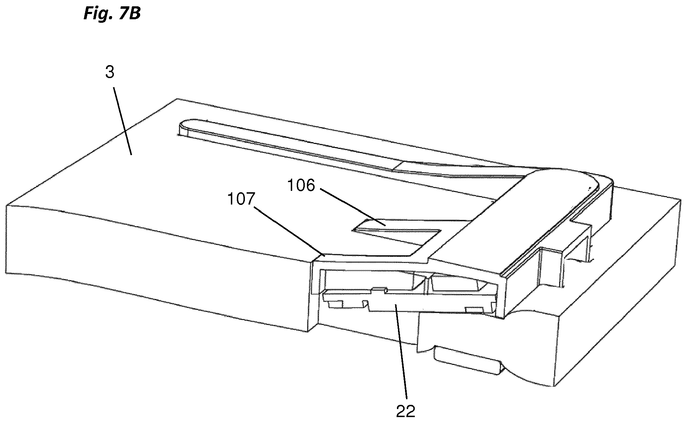

Avantageusement, comme représenté sur les figures 2A et 2B, l'unité de mesure du niveau d'encrassement est réalisée sous la forme d'au moins une carte électronique 22 sur laquelle sont soudés l'émetteur 20 et le récepteur 21. La carte électronique 22 est découpée pour former au moins une fourche présentant deux branches 220, 221 parallèles et une portion centrale 222 reliant les deux branches parallèles (figure 2B). Pour un fonctionnement en transmission, l'émetteur 20 et le récepteur 21 sont donc agencés chacun sur deux branches 220, 221 distinctes de la fourche. On peut noter que pour un fonctionnement en réflexion, l'émetteur 20 et le récepteur 21 seraient positionnés sur une même branche de la fourche et l'élément réfléchissant serait positionné sur l'autre branche de la fourche. Sur les figures 7A et 7B, on peut voir que de la matière filtrante composant le filtre 3 est positionnée entre les deux branches de la fourche de l'unité de mesure du niveau d'encrassement.

La distance entre l'émetteur 20 et le récepteur 21 peut notamment être choisie selon l'épaisseur du filtre 3, cette distance étant avantageusement choisie supérieure à l'épaisseur du filtre 3.

L'unité 2 de mesure est noyée à l'intérieur du filtre 3 et l'émetteur 20 et le récepteur 21 sont agencés de manière à ce que le faisceau F1 soient générés suivant une direction transversale à celle du flux d'air qui traverse le filtre 3. Avantageusement, le faisceau est émis suivant une direction perpendiculaire à celle du flux d'air qui traverse le filtre 3, c'est-à-dire selon un ou plusieurs plans parallèles aux deux surfaces 30, 31 du filtre 3.

Le traitement des données de mesure générées en sortie du récepteur 3 peut être réalisé au choix :
- Directement dans l'unité 2 de mesure du niveau d'encrassement en vue de déterminer le niveau d'encrassement du filtre. Dans ce cas, l'unité 2 de mesure du niveau d'encrassement comporte une unité de traitement intégrée qui est connectée à l'émetteur 20 et au récepteur 21 et agencée sur la même carte électronique 22 ou sur une autre carte électronique portée par le support.
- Dans une unité de traitement déportée par rapport au dispositif D de mesure de l'invention. Dans ce cas, l'unité de traitement est par exemple intégrée dans un contrôleur logique programmable (PLC pour "Programmable Logic Controller"), mini-contrôleur ou variateur de vitesse qui pourra comporter une ou plusieurs entrées connectées chacune à une unité de mesure du niveau d'encrassement distincte. Un câble de connexion permet de relier l'unité 2 de mesure du niveau d'encrassement à cette unité de traitement externe.

Dans les deux configurations, l'unité de traitement est agencée pour commander l'émission des faisceaux de mesure par l'émetteur 20 et pour traiter les faisceaux reçus par le récepteur 21 en vue de déterminer le niveau d'encrassement du filtre. Cette unité de traitement peut être réalisée sous forme analogique ou numérique. Dans ce dernier cas, elle comporte par exemple un microcontrôleur, des moyens de mémorisation et préférentiellement un convertisseur analogique/numérique pour convertir les signaux analogiques générés par le récepteur en données de mesure numériques qui seront mémorisées dans ses moyens de mémorisation.

L'unité 2 de mesure du niveau d'encrassement peut également comporter une unité 23 de signalisation réalisée sur la même carte électronique 22 ou sur une carte électronique distincte également portée par le support. Cette unité 23 de signalisation est commandée par l'unité de traitement pour signaler le niveau d'encrassement du filtre. L'unité 23 de signalisation comporte par exemple plusieurs indicateurs 230, par exemple lumineux, destinés à illustrer le niveau d'encrassement du filtre 3 et par exemple à alerter un opérateur de la nécessité de le remplacer si un seuil est dépassé. Sur les figures annexées, la carte électronique 22 comporte deux ailes 223, 224 qui s'étendent latéralement de part et d'autre de la branche centrale 222 de la fourche de mesure et sur lesquelles sont positionnés lesdits indicateurs 230 lumineux. La carte électronique 22 comporte deux faces principales opposées, dites face interne et face externe. Avantageusement, l'émetteur 20 et le récepteur 21 sont soudés sur la face externe de la carte électronique 22 tandis que les autres composants, notamment l'unité de traitement si elle est présente et l'unité de signalisation 23, sont soudés sur la face interne de la carte électronique 22.

Le support du dispositif de mesure D de l'invention est destiné à accueillir la carte électronique 22 de l'unité de mesure du niveau d'encrassement décrite ci-dessus et se compose de deux parties principales amovibles l'une par rapport à l'autre et destinées à être assemblées l'une à l'autre.

Le support comporte ainsi une première partie 10 et une deuxième partie 11 assemblées entre elles par des moyens de liaison adaptés. La première partie 10 et la deuxième partie 11 comportent chacune une armature, se présentant sous la forme d'une plaque découpée en forme de U, désignée respectivement première armature et deuxième armature. Les deux armatures sont destinées à être positionnées l'une en face de l'autre suivant deux plans parallèles et parallèles aux deux faces du filtre. Chaque armature comporte ainsi une portion centrale 100, 110 et deux portions latérales 101, 102, 111, 112, prolongeant la portion centrale suivant deux axes parallèles et se terminant chacune par une extrémité libre.

Selon l'invention, le filtre 3 est destiné à être positionné entre les deux parties 10, 11 du support. La première armature comporte une première face, dite face externe, orientée à l'opposée par rapport à la première face 30 du filtre et une deuxième face, dite face interne, venant en appui contre la première face 30 du filtre. De même, la deuxième armature comporte une première face, dite face externe, orientée à l'opposée par rapport à la deuxième face 31 du filtre et une deuxième face, dite face interne, venant en appui contre la deuxième face 31 du filtre. Les deux parties 10, 11 assemblées, la face interne de la première armature et la face interne de la deuxième armature sont placées en vis-à-vis, juste séparées par l'épaisseur du filtre.

Les moyens de liaison sont agencés pour fixer la première partie 10 à la deuxième partie 11, de manière à solidariser les deux parties entre elles. Les moyens de liaison sont préférentiellement formés sur les faces internes des deux armatures. Ces moyens de liaison sont par exemple constitués d'orifices et de pointes correspondantes destinées à coopérer entre eux. Les moyens de liaison sont préférentiellement réalisés de manière à permettre un ajustement de l'écartement entre la première partie 10 et la deuxième partie 11 pour s'adapter à l'épaisseur du filtre 3 employé. Sur les figures annexées, de manière non limitative, les pointes 103 sont réalisées sur la première partie 10 du support tandis que les orifices 113 correspondants sont réalisés sur la deuxième partie 11. Les moyens de liaison sont répartis sur les deux armatures et positionnés de manière à correspondre lors de l'assemblage. De manière non limitative, les moyens de liaison sont par exemple positionnés au niveau des extrémités libres des deux armatures et au niveau des deux points de jonction de chaque portion latérale avec la portion centrale.

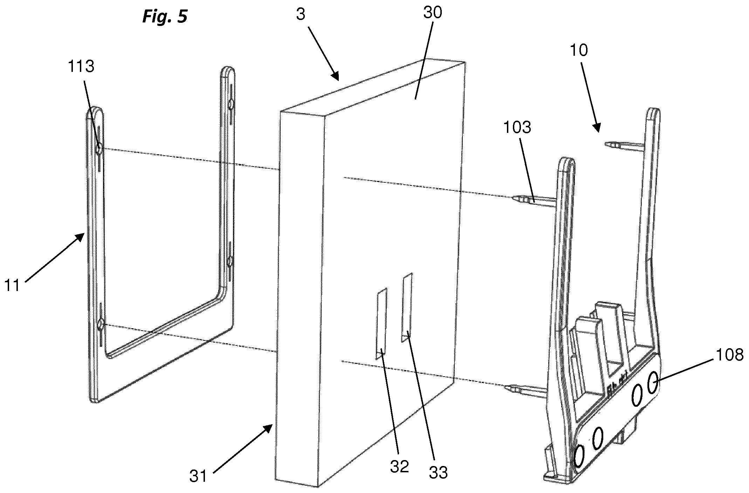

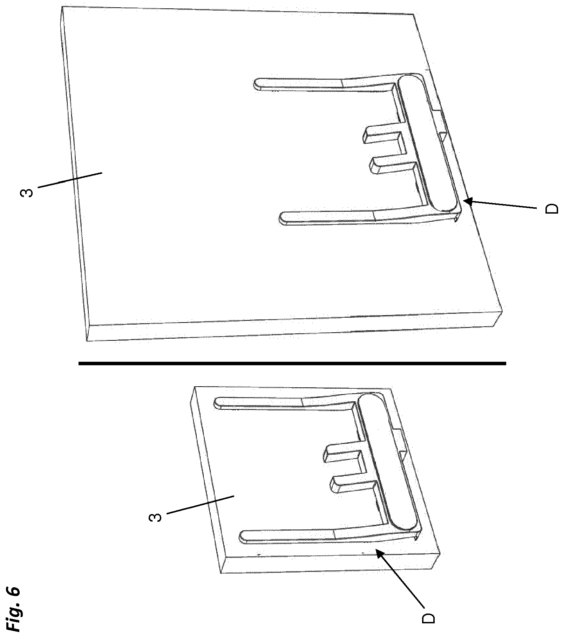

Comme représentées sur les figures 5, 6 et 7A, les deux parties 10, 11 du support sont positionnées sur le filtre 3 de part et d'autre de ces deux faces 30, 31 parallèles et sont assemblées l'une à l'autre en traversant le filtre 3 sur son épaisseur. Les pointes 103 des moyens de liaison situées sur une partie du support sont ainsi agencées pour traverser l'épaisseur du filtre afin de venir se loger chacune dans un orifice 113 correspondant situé sur l'autre partie.

Selon l'invention, le support comporte également des moyens de réception agencés pour recevoir l'unité 2 de mesure du niveau d'encrassement. Sur les figures annexées, de manière non limitative, les moyens de réception sont réalisés sur la première partie 10 du support.

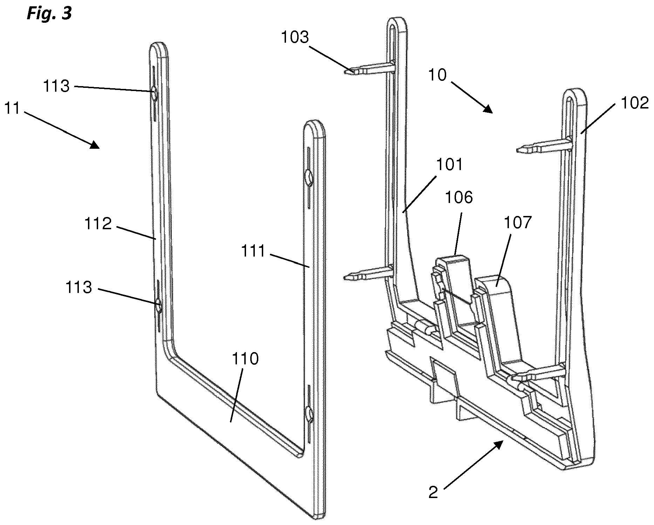

Les moyens de réception comportent notamment un logement 104 d'accueil et des organes de fixation 105 (figure 2A). Le logement 104 est formé d'une empreinte réalisée sur la face interne de la première partie 10 et présente une forme adaptée à celle de la carte électronique 22 de l'unité 2 de mesure du niveau d'encrassement. Avantageusement, le contour dudit logement 104 suit la forme externe de la branche centrale 100 de la première armature. Les organes de fixation 105 sont par exemple formés de pattes permettant de maintenir ladite carte 22 dans son logement et positionnés sur le contour du logement 104. Pour s'adapter à la forme de la carte électronique 22, la première armature est ainsi découpée de manière à ce que le logement forme deux branches de support parallèles et symétriques, une première branche 106 étant destinée à accueillir la branche 220 correspondante de la carte électronique 22 portant l'émetteur 20 et une deuxième branche 107 étant destinée à accueillir la branche 221 de la carte électronique qui porte le récepteur 21 (figure 2B). Comme représenté sur la figure 3, la carte électronique 22 est positionnée dans le logement 104 de sorte que sa face externe soit orientée vers la face interne de la première armature. Les indicateurs lumineux 230 sont ainsi placés dans le logement 104.

Les deux branches 106, 107 sont agencées pour positionner la totalité du faisceau dans l'espace défini entre les deux parties du support et destiné à accueillir le filtre 3. Pour cela, les deux branches 106, 107 sont inclinées vers l'intérieur de cet espace, formant un angle aigu par rapport au plan formé par la première armature. Comme décrit ci-dessus, l'émetteur 20 et le récepteur 21 sont agencés l'un par rapport à l'autre de sorte que le faisceau généré soit avantageusement situé dans un plan transversal par rapport au flux d'air et avantageusement parallèle aux deux faces 30, 31 du filtre 3. Comme représenté sur la figure 5, le filtre 3 sera préférentiellement découpé pour former deux cavités 32, 33 distinctes en vis-à-vis de chacune des deux branches 106, 107 de la fourche, de manière à venir loger, dans chacune d'elles, respectivement l'émetteur 20 et le récepteur 21 de l'unité 2 de mesure. De cette manière, l'émetteur 20 et le récepteur 21 sont noyés dans le filtre et séparés l'un de l'autre par du matériau alvéolaire du filtre 3 (figure 7B).

Par ailleurs, comme représenté sur la figure 5, la première armature présente préférentiellement plusieurs hublots 108 débouchant sur sa face externe de manière à rendre visible les indicateurs lumineux 230 placés sur la face externe de la carte électronique 22.

Comme représenté sur la figure 5, une fois l'unité 2 de mesure du niveau d'encrassement fixée sur son support, le dispositif de mesure D ainsi formé peut être positionné sur un filtre 3. Pour cela, il suffit de séparer la première partie 10 de la deuxième partie 11 du support puis de venir les positionner de part et d'autre des deux faces 30, 31 opposées du filtre 3. Les deux parties sont rapprochées de sorte que les pointes des moyens de liaison traversent le filtre sur son épaisseur jusqu'à venir se loger chacune dans un orifice correspondant présent de l'autre côté (figure 7A). En position, l'émetteur et le récepteur viennent occuper les deux cavités distinctes formées dans le filtre (figure 7B). L'écartement entre la première partie 10 et la deuxième partie 11 du support est judicieusement adapté à l'épaisseur du filtre 3 en enfonçant plus ou moins les pointes 103 dans les orifices 113.

La solution de l'invention présente ainsi de nombreux avantages, notamment :
- Elle est peu encombrante et facile à installer.
- Elle est indépendante du système de filtration, permettant ainsi d'ajouter la fonction de mesure du niveau d'encrassement sur des systèmes existants, sans modifier la structure du système.
- Elle peut s'adapter à des filtres d'épaisseurs différentes.
- Elle est réversible par rapport au flux d'air, le sens de celui-ci n'impactant pas le fonctionnement du dispositif de mesure de l'invention.
- Elle est composée de plusieurs parties, notamment du support, de la carte électronique, ce qui permet de pouvoir remplacer les pièces défectueuses de manière indépendante, sans changer tout le dispositif.
- Les deux armatures qui forment le support sont relativement fines, ce qui permet de ne pas perturber la filtration.
- La carte électronique peut embarquer une électronique simple (émetteur+récepteur+indicateurs lumineux) ou une électronique plus élaborée, en y ajoutant un microcontrôleur formant l'unité de traitement, mais aussi d'autres types de capteurs comme par exemple un capteur de température, un capteur d'humidité et/ou un capteur de pression pour des mesures dans l'air ambiant.

## Revendications

1. Support pour unité (2) de mesure du niveau d'encrassement d'un filtre (3), ladite unité de mesure comprenant un émetteur destiné à générer un faisceau et un récepteur pour capter ledit faisceau, ledit filtre étant destiné à être employé dans un système de filtration d'un fluide et comportant au moins une première face (30) et une deuxième face (31) séparées entre elles par l'épaisseur du filtre et destinées à être traversées par un flux dudit fluide, ledit support comportant:
- Une première partie (10) destinée à venir en vis-à-vis de la première face (30) du filtre,
- Une deuxième partie (11) destinée à venir en vis-à-vis de la deuxième face (31) du filtre,
- Des moyens de liaison agencés pour relier la première partie (10) à la deuxième partie (11) et définissant un espace entre la première partie et la deuxième partie pour accueillir le filtre, ledit support étant **caractérisé en ce qu'**il comporte :
- Des moyens de réception agencés pour recevoir ladite unité de mesure du niveau d'encrassement sur ladite première partie (10), et **en ce que**
- Les moyens de réception comportent un logement (104) de forme adaptée à celle de l'unité de mesure du niveau d'encrassement et des organes de fixation (105) de ladite unité (2) de mesure du niveau d'encrassement dans ledit logement,
- Le logement définit une première branche (106) et une deuxième branche (107) destinées à supporter un émetteur de ladite unité (2) de mesure du niveau d'encrassement et un récepteur de ladite unité (2) de mesure du niveau d'encrassement,
- la première branche (106) et la deuxième branche (107) sont inclinées vers l'intérieur de l'espace formé entre la première partie (10) et la deuxième partie (11), de manière à orienter la première branche et la deuxième branche de l'unité de mesure du niveau d'encrassement du filtre dans ledit espace destiné à être occupé par le filtre.

2. Support selon la revendication 1, **caractérisé en ce que** les moyens de liaison sont agencés pour adapter l'écartement entre la première partie (10) et la deuxième partie (11) en vue de l'adapter à l'épaisseur du filtre.

3. Support selon la revendication 1 ou 2, **caractérisé en ce que** les moyens de liaison comportent au moins deux pointes (103) et deux orifices (113) de réception destinés chacun à coopérer avec une pointe distincte en vue d'assembler la première partie (10) à la deuxième partie (11).

4. Support selon la revendication 1 ou 2, **caractérisé en ce que** ladite armature de la première partie est en forme de U et présente une portion centrale (100) et deux portions latérales (101, 102) prolongeant ladite partie centrale et se terminant chacune par une extrémité libre.

5. Support selon la revendication 4, **caractérisé en ce que** la deuxième partie comporte une deuxième armature en forme de U destinée à être positionnée en vis-à-vis de la première armature de la première partie et présentant une portion centrale (110) et deux portions latérales (111, 112) prolongeant ladite partie centrale et se terminant chacune par une extrémité libre.

6. Dispositif de mesure (D) du niveau d'encrassement d'un filtre (3), ledit filtre étant destiné à être employé dans un système de filtration d'un fluide et comportant au moins une première face (30) et une deuxième face (31) séparées entre elles par l'épaisseur du filtre et destinées à être traversées par un flux dudit fluide, ledit dispositif (D) comportant une unité (2) de mesure du niveau d'encrassement d'un filtre et étant **caractérisé en ce qu'**il comporte un support tel que défini dans l'une des revendications 1 à 5 sur lequel est fixé ladite unité (2) de mesure du niveau d'encrassement.

7. Dispositif selon la revendication 6, **caractérisé en ce que** ladite unité de mesure d'encrassement comporte un émetteur (20) agencé pour émettre un faisceau et un récepteur (21) agencé pour recevoir ledit faisceau.

8. Dispositif selon la revendication 7, **caractérisé en ce que** ledit émetteur (20) est agencé par rapport audit récepteur (21) pour émettre un faisceau suivant une direction transversale à celle du flux dudit fluide.

9. Dispositif selon la revendication 8, caractérisé en ce ledit émetteur (20) est agencé par rapport audit récepteur (21) pour émettre un faisceau suivant une direction parallèle à au moins une des faces (30, 31) dudit filtre.

10. Dispositif selon l'une des revendications 7 à 9, **caractérisé en ce que** l'unité (2) de mesure du niveau d'encrassement est réalisée sous la forme d'au moins une carte électronique (22) découpée de manière à former deux branches distinctes, une première branche (220) portant ledit émetteur (20) et une deuxième branche (221) portant ledit récepteur (21).

11. Dispositif selon la revendication 10, **caractérisé en ce que** l'unité (2) de mesure du niveau d'encrassement comporte une unité (23) de signalisation du niveau d'encrassement du filtre (3).

12. Dispositif selon la revendication 11, **caractérisé en ce que** l'unité de signalisation comporte plusieurs indicateurs lumineux soudés sur ladite carte électronique (22).

## Patentansprüche

1. Träger für eine Messeinheit (2) des Verschmutzungsgrads eines Filters (3), wobei die Messeinheit einen Emitter, der dazu bestimmt ist, einen Strahl zu erzeugen, und einen Empfänger zum Auffangen des Strahls enthält, wobei der Filter dazu bestimmt ist, in einem Filtersystem eines Fluids verwendet zu werden und mindestens eine erste Seite (30) und eine zweite Seite (31) aufweist, die durch die Dicke des Filters voneinander getrennt und dazu bestimmt sind, von einem Strom des Fluids durchquert zu werden, wobei der Träger aufweist:
- einen ersten Teil (10), dazu bestimmt, der ersten Seite (30) des Filters gegenüberzuliegen,
- einen zweiten Teil (11), dazu bestimmt, der zweiten Seite (31) des Filters gegenüberzuliegen,
- Verbindungseinrichtungen, die eingerichtet sind, um den ersten Teil (10) mit dem zweiten Teil (11) zu verbinden, und einen Raum zwischen dem ersten Teil und dem zweiten Teil definieren, um den Filter aufzunehmen,
wobei der Träger **dadurch gekennzeichnet ist, dass** er aufweist:
- Empfangseinrichtungen, die eingerichtet sind, um die Messeinheit des Verschmutzungsgrads im ersten Teil (10) zu empfangen, und dass
- die Empfangseinrichtungen eine Aufnahme (104) von an diejenige der Messeinheit des Verschmutzungsgrads angepasster Form und Befestigungsorgane (105) der Messeinheit (2) des Verschmutzungsgrads in der Aufnahme aufweisen,
- die Aufnahme einen ersten Zweig (106) und einen zweiten Zweig (107) definiert, die dazu bestimmt sind, einen Emitter der Messeinheit (2) des Verschmutzungsgrads und einen Empfänger der Messeinheit (2) des Verschmutzungsgrads zu tragen,
- der erste Zweig (106) und der zweite Zweig (107) zur Innenseite des Raums geneigt sind, der zwischen dem ersten Teil (10) und dem zweiten Teil (11) geformt wird, um den ersten Zweig und den zweiten Zweig der Messeinheit des Verschmutzungsgrads des Filters in dem Raum auszurichten, der dazu bestimmt ist, vom Filter eingenommen zu werden.

2. Träger nach Anspruch 1, **dadurch gekennzeichnet, dass** die Verbindungseinrichtungen eingerichtet sind, um den Abstand zwischen dem ersten Teil (10) und dem zweiten Teil (11) anzupassen, um ihn an die Dicke des Filters anzupassen.

3. Träger nach Anspruch 1 oder 2, **dadurch gekennzeichnet, dass** die Verbindungseinrichtungen mindestens zwei Spitzen (103) und zwei Empfangsöffnungen (113) aufweisen, die je dazu bestimmt sind, mit einer anderen Spitze zusammenzuwirken, um den ersten Teil (10) mit dem zweiten Teil (11) zusammenzubauen.

4. Träger nach Anspruch 1 oder 2, **dadurch gekennzeichnet, dass** das Gestell des ersten Teils U-förmig ist und einen zentralen Abschnitt (100) und zwei Seitenabschnitte (101, 102) aufweist, die den zentralen Teil verlängern und je in einem freien Ende enden.

5. Träger nach Anspruch 4, **dadurch gekennzeichnet, dass** der zweite Teil ein zweites U-förmiges Gestell aufweist, das dazu bestimmt ist, dem ersten Gestell des ersten Teils gegenüber positioniert zu werden, und einen zentralen Abschnitt (110) und zwei Seitenabschnitte (111, 112) aufweist, die den zentralen Teil verlängern und je in einem freien Ende enden.

6. Messvorrichtung (D) des Verschmutzungsgrads eines Filters (3), wobei der Filter dazu bestimmt ist, in einem Filtersystem eines Fluids verwendet zu werden, und mindestens eine erste Seite (30) und eine zweite Seite (31) aufweist, die durch die Dicke des Filters voneinander getrennt und dazu bestimmt sind, von einem Strom des Fluids durchquert zu werden, wobei die Vorrichtung (D) eine Messeinheit (2) des Verschmutzungsgrads eines Filters aufweist und **dadurch gekennzeichnet ist, dass** sie einen wie in einem der Ansprüche 1 bis 5 definierten Träger aufweist, an dem die Messeinheit (2) des Verschmutzungsgrads befestigt ist.

7. Vorrichtung nach Anspruch 6, **dadurch gekennzeichnet, dass** die Verschmutzungs-Messeinheit einen Emitter (20), der eingerichtet ist, um einen Strahl zu senden, und einen Empfänger (21) aufweist, der eingerichtet ist, um den Strahl zu empfangen.

8. Vorrichtung nach Anspruch 7, **dadurch gekennzeichnet, dass** der Emitter (20) bezüglich des Empfängers (21) eingerichtet ist, um einen Strahl gemäß einer Richtung quer zu derjenigen des Fluidstroms zu emittieren.

9. Vorrichtung nach Anspruch 8, **dadurch gekennzeichnet, dass** der Emitter (20) bezüglich des Empfängers (21) eingerichtet ist, um einen Strahl gemäß einer Richtung parallel zu mindestens einer der Seiten (30, 31) des Filters zu senden.

10. Vorrichtung nach einem der Ansprüche 7 ä 9, **dadurch gekennzeichnet, dass** die Messeinheit (2) des Verschmutzungsgrads in Form mindestens einer Elektronikkarte (22) hergestellt wird, die so geschnitten ist, dass sie zwei getrennte Zweige formt, einen ersten Zweig (220), der den Emitter (20) trägt, und einen zweiten Zweig (221), der den Empfänger (21) trägt.

11. Vorrichtung nach Anspruch 10, **dadurch gekennzeichnet, dass** die Messeinheit (2) des Verschmutzungsgrads eine Signalisierungseinheit (23) des Verschmutzungsgrads des Filters (3) aufweist.

12. Vorrichtung nach Anspruch 11, **dadurch gekennzeichnet, dass** die Signalisierungseinheit mehrere Leuchtanzeigen aufweist, die auf die Elektronikkarte (22) geschweißt sind.

## Claims

1. Support for a unit (2) for measuring the level of clogging of a filter (3), said measuring unit including a sender intended to generate a beam and a receiver to capture said beam, said filter being intended to be employed in a system for filtering a fluid and having at least a first face (30) and a second face (31) separated from one another by the thickness of the filter and intended to have a flow of said fluid pass through them, said support including:
- a first part (10) intended to face the first face (30) of the filter,
- a second part (11) intended to face the second face (31) of the filter,
- connecting means adapted to connect the first part (10) to the second part (11) and defining a space between the first part and the second part to receive the filter,
Said support being **characterized in that** it includes:
- receiving means adapted to receive said unit for measuring the level of clogging on said first part (10), and **in that**
- the receiving means include a housing (104) having a shape adapted to that of the clogging level measuring unit and means (105) for fixing said clogging level measuring unit (2) in said housing,
- the housing defines a first branch (106) and a second branch (107) intended to support a sender of said clogging level measuring unit (2) and a receiver of said clogging level measuring unit (2),
- the first branch (106) and the second branch (107) are inclined toward the interior of the space formed between the first part (10) and the second part (11) so as to orient the first branch and the second branch of the unit for measuring the level of clogging of the filter in said space intended to be occupied by the filter.

2. Support according to Claim 1, **characterized in that** the connecting means are adapted to adapt the distance between the first part (10) and the second part (11) in order to adapt it to the thickness of the filter.

3. Support according to Claim 1 or 2, **characterized in that** the connecting means include at least two spikes (103) and two receiving orifices (113) each intended to cooperate with a separate spike in order to assemble the first part (10) to the second part (11).

4. Support according to Claim 1 or 2, **characterized in that** said armature of the first part is U-shaped and has a central portion (100) and two lateral portions (101, 102) extending said central portion and each terminating in a free end.

5. Support according to Claim 4, **characterized in that** the second part includes a U-shaped second armature intended to be positioned facing the first armature of the first part and having a central portion (110) and two lateral portions (111, 112) extending said central part and each terminating in a free end.

6. Device (D) for measuring the level of clogging of a filter (3), said filter being intended to be employed in a system for filtering a fluid and having at least a first face (30) and a second face (31) separated from one another by the thickness of the filter and intended to have a flow of said fluid pass through them, said device (D) including a unit (2) for measuring the level of clogging of a filter and being **characterized in that** it includes a support as defined in any one of Claims 1 to 5 to which said unit (2) for measuring the clogging level is fixed.

7. Device according to Claim 6, **characterized in that** said clogging measuring unit includes a sender (20) adapted to emit a beam and a receiver (21) adapted to receive said beam.

8. Device according to Claim 7, **characterized in that** said sender (20) is arranged relative to said receiver (21) to emit a beam in a direction transverse to that of the flow of said fluid.

9. Device according to Claim 8, **characterized in that** said sender (20) is arranged relative to said receiver (21) to emit a beam in a direction parallel to at least one of the faces (30, 31) of said filter.

10. Device according to any one of Claims 7 to 9, **characterized in that** the unit (2) for measuring the level of clogging takes the form of at least one electronic card (22) cut to form two separate branches, a first branch (220) carrying said sender (20) and a second branch (221) carrying said receiver (21).

11. Device according to Claim 10, **characterized in that** the clogging level measuring unit (2) includes a unit (23) for signalling the level of clogging of the filter (3).

12. Device according to Claim 11, **characterized in that** the signalling unit includes a plurality of indicator lamps soldered to said electronic card (22).
